**Europäisches Patentamt**

**European Patent Office**

**Office européen des brevets**

(11) Veröffentlichungsnummer : **0 066 825**
**B1**

(12) **EUROPÄISCHE PATENTSCHRIFT**

(45) Veröffentlichungstag der Patentschrift :
17.10.84

(51) Int. Cl.³ : **F 16 L 21/00, F 16 L 17/00**

(21) Anmeldenummer : 82104758.6

(22) Anmeldetag : 29.05.82

(54) Gummimuffe für eine Breitbandschelle.

(30) Priorität : 06.06.81 DE 3122708

(43) Veröffentlichungstag der Anmeldung :
15.12.82 Patentblatt 82/50

(45) Bekanntmachung des Hinweises auf die Patenterteilung : 17.10.84 Patentblatt 84/42

(84) Benannte Vertragsstaaten :
CH FR GB IT LI

(56) Entgegenhaltungen :
CH-A- 432 956
DE-B- 2 834 009
FR-A- 2 072 809
FR-A- 2 237 111
FR-A- 2 343 958
GB-A- 995 409
GB-A- 1 060 504
US-A- 3 430 989

(73) Patentinhaber : Rasmussen GmbH
Edisonstrasse 4
D-6457 Maintal 3 (DE)

(72) Erfinder : Löhr, Robert
Freihofstrasse 8
D-6453 Seligenstadt (DE)

(74) Vertreter : Knoblauch, Ulrich, Dr.-Ing.
Kühhornshofweg 10
D-6000 Frankfurt am Main 1 (DE)

**Beschreibung**

Die Erfindung betrifft eine Muffe aus Gummi für eine Breitbandschelle mit einem die Muffe außen umgebenden spannbaren Schellenband zur dichten Axialverbindung der Enden zweier Rohre, wobei die Muffe innen durch eine mittlere ringförmig umlaufende Dichtrippe in zwei gleiche Hälften unterteilt ist, von denen jede Hälfte einen am Rohreinführungsende der Muffe und einen an der Dichtrippe angrenzenden Ringabschnitt und zwischen diesen Ringabschnitten nach innen gerichtete ringförmig umlaufende Dichtlippen aufweist, die beidseitig von inneren Ringnuten begrenzt sind, wobei wenigstens einige der Dichtlippen im ungespannten Zustand der Schelle einen kleineren Innendurchmesser als die Ringabschnitte und zur mittleren Dichtrippe hin geneigte Flanken aufweisen und der Nutengrund-Durchmesser der der mittleren Dichtrippe zunächstliegenden Ringnut größer als der Innendurchmesser der Ringabschnitte ist.

Bei einer bekannten Muffe dieser Art (FR-A-2 072 809) hat der an der mittleren Dichtrippe angrenzende Ringabschnitt jeder Muffenhälfte einen größeren Innendurchmesser als der am Einführungsende angrenzende Ringabschnitt. Der Nutengrund-Durchmesser der zwischen den Dichtlippen liegenden Ringnuten ist ebenso groß wie der Innendurchmesser des an der mittleren Dichtrippe angrenzenden Ringabschnitts. Der Innendurchmesser der Dichtlippen ist dagegen kleiner als der dieses Ringabschnitts und nimmt vom Einführungsende zur mittleren Dichtrippe hin ab. Der Außendurchmesser der Muffe ist über ihre gesamte Axiallänge konstant. Eine solche Gummimuffe ist besonders zum Ausgleich von Durchmesserunterschieden der zu verbindenden Rohre geeignet. Wenn das Schellenband jedoch nicht hinreichend fest gespannt wird oder der Schellenbandverschluß nur eine begrenzte Spannkraft zuläßt, besteht die Gefahr, daß die Rohre bei horizontaler Verlegung, insbesondere bei hängender Verlegung, aufgrund ihres Eigengewichts im Bereich der Verbindungsstelle abwinkeln, so daß das Rohr in der jeweiligen Muffenhälfte nicht genau achsparallel oder koaxial zur Breitbandschelle verläuft und das Druckfluid an der Verbindungsstelle zwischen Gummimuffe und Rohr entweicht.

Der Erfindung liegt die Aufgabe zugrunde, eine Gummimuffe der gattungsgemäßen Art anzugeben, die eine höhere Biegesteifigkeit und Dichtigkeit im Bereich der Verbindungsstelle der zu verbindenden Rohre sicherstellt.

Erfindungsgemäß ist diese Aufgabe dadurch gelöst, daß die Innendurchmesser der Ringabschnitte gleich sind und der Nutengrund-Durchmesser aller durch die Dichtlippen begrenzten Ringnuten größer als der Innendurchmesser der Ringabschnitte ist, und daß der Außendurchmesser jeder Muffenhälfte im Bereich zwischen dem am Rohreinführungsende angrenzenden Ringabschnitt und der am anderen Ringabschnitt angrenzenden Ringnut im ungespannten Zustand der Schelle größer als in den axial benachbarten Bereichen ist, wobei dieser Bereich mit dem größeren Außendurchmesser und den innen ausgebildeten Dichtlippen beim Spannen des Schellenbandes radial nach innen eindrückbar ist, um die Dichtlippen an die Außenseite der Rohre anzupressen.

Hierbei bilden die erwähnten Ringabschnitte in erster Linie Stützzonen, die einer Abwinklung der Rohre im Bereich der Verbindungsstelle bei radialer Belastung entgegenwirken, während der erwähnte Bereich zwischen dem am Rohreinführungsende angrenzenden Ringabschnitt und der em anderen Ringabschnitt angrenzenden Ringnut in erster Linie als Dichtzone wirkt, innerhalb der eine besonders hohe Dichtwirkung erzielt wird. Wenn nämlich das Schellenband gespannt wird, drückt es zunächst den Bereich mit den innen ausgebildeten Dichtlippen und dem größeren Außendurchmesser radial nach innen, so daß die Dichtlippen besonders fest und großflächig an die Außenseite des betreffenden Rohres gedrückt werden, wobei sie sich radial nach außen umbiegen. Wenn dann trotz der durch die Stützzonen bewirkten hohen Quersteifigkeit aufgrund übermäßiger radialer Belastung der Verbindungsstelle eine Verbiegung bzw. Abwinklung der Rohre relativ zueinander bewirkt werden sollte, stellen sich die Dichtlippen aufgrund ihrer Vorspannung in dem durch die Abwinklung entlasteten Umfangsbereich selbsttätig nach, so daß weiterhin für eine Abdichtung gesorgt wird. Sollte hierbei Druckfluid die Grenzfläche zwischen dem an der mittleren Dichtrippe angrenzenden Ringabschnitt und dem eingeführten Rohrende durchdringen, dann drückt es zusätzlich im Sinne einer Erhöhung der Dichtkraft auf die radial äußere Flanke der Dichtlippen.

Vorzugsweise haben einige der Dichtlippen im ungespannten Zustand der Schelle den gleichen Innendurchmesser wie die Ringabschnitte. Auf diese Weise erfolgt ein stufenweises Anlegen der Dichtlippen beim Spannen an die Außenseite des Rohres mit entsprechend stufenweiser Erhöhung der Dichtwirkung in Abhängigkeit von der Spannkraft. Die Dichtlippen mit dem größeren Innendurchmesser werden daher nicht in dem Maße wie die anderen Dichtlippen verformt, so daß sie gegebenenfalls einer geringeren bleibenden Verformung unterliegen und die Dichtwirkung längere Zeit sicherstellen. Außerdem erleichtern sie das Einführen des Rohres.

Sodann kann der an der mittleren Dichtrippe angrenzende Ringabschnitt ringförmig umlaufende Dichtrippen mit symmetrischen Flanken aufweisen. Diese Dichtrippen sorgen für eine zusätzliche Dichtwirkung.

Ferner können in den erwähnten Ringabschnitten harte Ringe eingebettet sein, die zur Erhöhung der Steifigkeit der Stützzonen beitragen.

Die Erfindung und ihre Weiterbildungen werden nachstehend anhand der Zeichnung eines bevorzugten Ausführungsbeispiels näher beschrieben. Es zeigen :

Figur 1 eine Draufsicht auf eine Breitbandschelle, teilweise im Schnitt, mit einer erfindungsgemäßen Muffe und

Figur 2 einen vergrößerten Ausschnitt der Muffe nach Fig. 1.

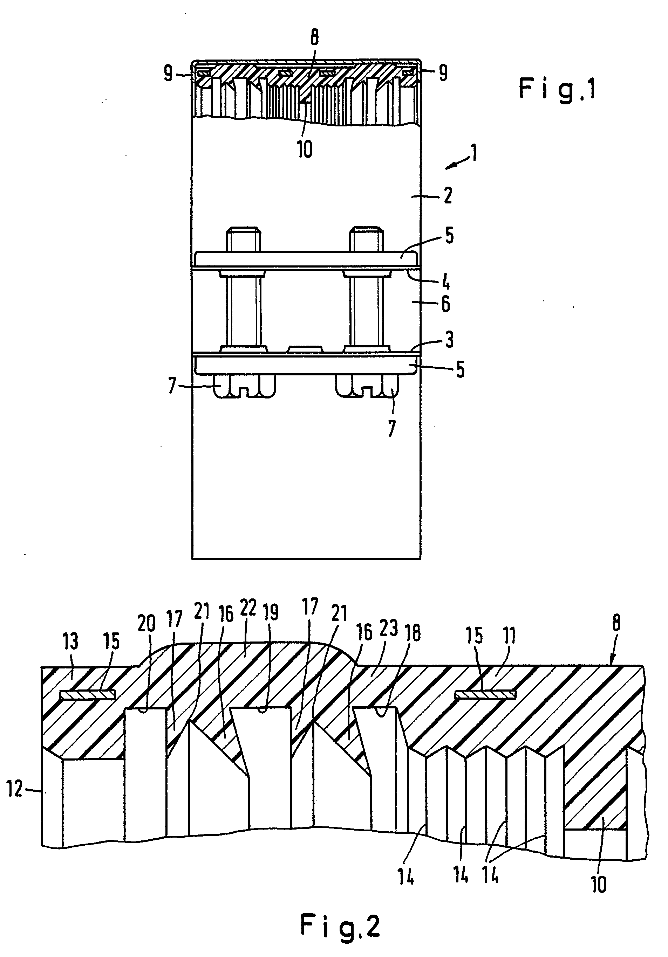

Die in Fig. 1 dargestellte Breitbandschelle 1 dient zum dichten Verbinden der stirnseitig einander zugekehrten Enden zweier (nicht dargestellter) Rohre. Die Breitbandschelle 1 besteht aus einem breiten Schellenband 2 mit radial nach außen abgewinkelten Endabschnitten 3 und 4, die durch dickere Metallplatten 5 verstärkt sind, einer den Spalt zwischen den Endabschnitten 3, 4 überbrückenden Lasche 6, die Endabschnitte 3, 4 und Platten 5 verbindenden Spannschrauben 7 und einer Muffe 8 aus Gummi, z. B. EPDM oder APTK. Das Schellenband 2 übergreift die Muffe 8 an den Stirnseiten mit radialen Flanschen 9.

Die Muffe 8 besitzt innen eine mittlere ringförmig umlaufende Dichtrippe 10. Diese Dichtrippe 10 unterteilt die Muffe 8 axial in zwei gleiche symmetrische Hälften, in die jeweils eines der Rohrenden bis zur Dichtrippe 10 eingeführt wird. Wegen der Symmetrie der Muffe wird nachstehend nur ihre in Fig. 2 dargestellte linke Hälfte ausführlicher beschrieben.

An der Dichtrippe 10 schließt sich ein Ringabschnitt 11 und am Rohreinführungsende 12 der Muffe 8 ein Ringabschnitt 13 unmittelbar an. Die Ringabschnitte 11 und 13 haben den gleichen Innendurchmesser. Der Ringabschnitt 11 ist innen mit vier ringförmig umlaufenden Dichtrippen 14 mit symmetrischen Flanken bzw. einem Querschnitt in Form eines gleichseitigen Dreiecks versehen. Der Ringabschnitt 13 ist innen über seine größte Länge kreiszylindrisch. Lediglich zum Ende 12 hin ist er konisch erweitert, um das Einführen des Rohres zu erleichtern. Beide Ringabschnitte 11 und 13 sind durch einen harten Ring 15 aus Metall (Blech) oder Kunststoff versteift. Zwischen den Ringabschnitten 11 und 13 sind Dichtlippen 16, 17 ausgebildet, die Ringnuten 18, 19, 20 und 21 begrenzen. Die beiden Dichtlippen 16 haben zur Dichtrippe 10 hin geneigte konische Flanken und einen kleineren Innendurchmesser als die Ringabschnitte 11, 13. Die Dichtlippen 17 haben eine radiale, dem Ende 12 zugekehrte und eine zum Ende 12 hin geneigte konische Flanke und den gleichen Innendurchmesser wie die Ringabschnitte 11, 13. Die Nutengrund-Durchmesser der Ringnuten 18, 19 und 20 sind einander gleich und größer als der Innendurchmesser der Ringabschnitte 11, 13. Die Ringnuten 21 zwischen jeweils zwei unterschiedlichen benachbarten Dichtlippen 16, 17 sind gleich und im Querschnitt dreieckförmig. Ihr Nutengrund-Durchmesser ist ebenfalls größer als der Innendurchmesser der Ringabschnitte 11, 13, jedoch kleiner als der Nutengrund-Durchmesser der Ringnuten 18 bis 20. Der die Dichtlippen 16, 17 aufweisende ringförmig umlaufende Bereich 22 zwischen dem Ringabschnitt 13 und der Ringnut 18 hat einen um etwa 0,8 bis 2,5 % größeren Außendurchmesser als die an diesen Bereich 22 angrenzenden außen zylindrischen Bereiche.

Der Innendurchmesser der Ringabschnitte 11, 13 ist gleich oder etwas kleiner als der Außendurchmesser des einzuführenden Rohres gewählt, so daß sich bei dem kleineren Innendurchmesser eine Vorspannung in der Muffe 8 beim Einführen der Rohre ergibt. Um das Einführen zu erleichtern, z. B. wenn der Außendurchmesser oder die Oberflächenrauhigkeit des Rohres etwas zu groß ist, kann jede Muffenhälfte in sich, wie eine Manschette, um den Ringabschnitt 23, der innen durch den Nutengrund der Ringnut 18 begrenzt ist und aufgrund seiner geringen Wandstärke wie ein Gelenk wirken kann, nach außen umgestülpt werden, so daß bei der Einführung des Rohrendes lediglich der Widerstand der Dichtrippen 14 überwunden zu werden braucht. Anschliessend wird dann der umgestülpte Teil der Muffenhälfte wieder zurückgestülpt, so daß er sich an der Außenseite des Rohres anlegt. Dabei werden die Dichtlippen 16 wegen ihres kleineren Innendurchmessers stärker und die Dichtlippen 17 weniger stark radial nach außen gebogen.

Nach der Einführung beider Rohrenden wird das Schellenband 2 mittels der Schrauben 7 gespannt. Hierbei legen sich die Dichtlippen 16 und 17 wegen des äußeren Ringwulstes im Bereich 22, der beim Spannen des Schellenbandes zuerst radial nach innen gredrückt wird, besonders fest und großflächig an der Außenseite des Rohres an, wobei sie noch weiter radial nach außen in die Freiräume der benachbarten Ringnuten 18, 19 und 20 gebogen werden.

Wegen ihrer größeren Wandstärke einerseits und der harten Ringe 15 andererseits sind die Ringabschnitte 11, 13 steifer als die übrigen, zwischen diesen Abschnitten liegenden Bereich jeder Muffenhälfte. Die Ringabschnitte 11, 13 wirken daher einer Abwinkelung der Rohre im Bereich ihrer Verbindungsstellen, z. B. aufgrund des Eigengewichts der Rohre bei horizontaler Aufhängung der Rohre, besonders stark entgegen. Die Ringabschnitte 11 und 13 bilden daher in erster Linie Stützzonen gegen eine Abwinkelung der Rohre, während der die Dichtlippen 16, 17 aufweisende Bereich 22 in erster Linie als Dichtzone wirkt. Dabei sorgt diese Dichtzone selbst dann noch für eine hinreichende Abdichtung, wenn sich die verbundenen Rohre aufgrund übermäßiger radialer Belastung oder bei unzureichender Spannkraft des Schellenbandes an der Verbindungsstelle abwinkeln sollten, da sich die umgebogenen Dichtlippen zumindest in dem jeweils durch die Abwinkelung der Rohre entlasteten Umfangsbereich aufgrund ihrer Vorspannung wieder radial nach innen aufrichten. Darüber hinaus übt das gegebenenfalls die Dichtrippen 14 überwindende Druckfluid, das in die Ringnut 18 eindringt, einen Druck auf die der Dichtrippe 10 zugekehrte Flanke der angrenzenden Dichtlippe 16 aus, so daß diese Dichtlippe 16 um so fester gegen die Außenseite des Rohres gedrückt wird.

Sollte das Druckfluid dennoch bis in die Ringnut 19 durchdringen, dann sorgt schließlich die an diese Ringnut 19 angrenzende Dichtlippe 16 auf die gleiche Weise für eine erhöhte Abdichtung unter dem Druck des Druckfluids.

Insgesamt erhält die Rohrverbindung aufgrund der Muffe eine sehr hohe Quersteifigkeit und Dichtigkeit, auch dann, wenn anstelle der Spannschrauben 7 eine andere Spannvorrichtung, beispielsweise ein Spannkeil oder ein durch Spreizen zu streckendes Winkelblech gemäß DE-B-28 34 009, verwendet wird.

### Ansprüche

1. Muffe (8) aus Gummi für eine Breitbandschelle (1) mit einem die Muffe (8) außen umgebenden spannbaren Schellenband (2) zur dichten Axialverbindung der Enden zweier Rohre, wobei die Muffe (8) innen durch eine mittlere ringförmig umlaufende Dichtrippe (10) in zwei gleiche Hälften unterteilt ist, von denen jede Hälfte einen am Rohreinführungsende (12) der Muffe (8) und einen an der Dichtrippe (10) angrenzenden Ringabschnitt (13, 11) und zwischen diesen Ringabschnitten nach innen gerichtete ringförmig umlaufende Dichtlippen (16, 17) aufweist, die beidseitig von inneren Ringnuten (18-21) begrenzt sind, wobei wenigstens einige (16) der Dichtlippen (16, 17) im ungespannten Zustand der Schelle (1) einen kleineren Innendurchmesser als die Ringabschnitte (11, 13) und zur mittleren Dichtrippe (10) hin geneigte Flanken aufweisen und der Nutengrund-Durchmesser der der mittleren Dichtrippe (10) zunächstliegenden Ringnut (18) größer als der Innendurchmesser der Ringabschnitte (11, 13) ist, dadurch gekennzeichnet, daß die Innendurchmesser der Ringabschnitte (11, 13) gleich sind und der Nutengrund-Durchmesser aller durch die Dichtlippen (16, 17) begrenzten Ringnuten (18-21) größer als der Innendurchmesser des Ringabschnitte (11, 13) ist, und daß der Außendurchmesser jeder Muffenhälfte im Bereich (22) zwischen dem am Rohreinführungsende (12) angrenzenden Ringabschnitt (13) und der am anderen Ringabschnitt (11) angrenzenden Ringnut (18) im ungespannten Zustand der Schelle (1) größer als in den axial benachbarten Bereichen (13 ; 23, 11) ist, wobei dieser Bereich (22) mit dem größeren Außendurchmesser und den innen ausgebildeten Dichtlippen (16, 17) beim Spannen des Schellenbandes (2) radial nach innen eindrückbar ist, um die Dichtlippen (16, 17) an die Außenseite der Rohre anzupressen.

2. Muffe nach Anspruch 1, dadurch gekennzeichnet, daß einige (17) der Dichtlippen (16, 17) im ungespannten Zustand der Schelle (1) den gleichen Innendurchmesser wie die Ringabschnitte (11, 13) aufweisen.

3. Muffe nach Anspruch 1 oder 2, dadurch gekennzeichnet, daß der an der mittleren Dichtrippe (10) angrenzende Ringabschnitt (11) ringförmig umlaufende Dichtrippen (14) mit symmetrischen Flanken aufweist.

4. Muffe nach einem der Ansprüche 1 bis 3, dadurch gekennzeichnet, daß in den Ringabschnitten (11, 13) harte Ringe (15) eingebettet sind.

### Claims

1. A coupling member (8) comprising rubber for a wide-strap clip (1) having a tightenable clip strap (2) which extends around the outside of the coupling member (8) for sealingly axially joining the ends of two pipes, wherein the coupling member (8) is internally subdivided into two equal halves by a central sealing rib extending in an annular configuration therearound, each said half comprising an annular portion (13) adjoining the pipe insertion end (12) of the coupling member and an annular portion (11) adjoining the sealing rib (10) and, between said annular portions (13, 11), inwardly directed sealing lips (16, 17) which extend in an annular configuration around the coupling member, the sealing lips (16, 17) being delimited on both sides by internal annular grooves (18-21), wherein at least some (16) of the sealing lips (16, 17), in the untightened condition of the clip (1), are of smaller internal diameter than the annular portions (11, 13) and have side surfaces which are inclined towards the middle sealing rib (10), and the diameter of the floor of the annular groove (18) which is most closely adjacent to the middle sealing rib (10) is larger than the internal diameter of the annular portions (11, 13), characterised in that the internal diameters of the annular portions (11, 13) are the same and the diameter of the floor of all annular grooves (18-21) which are delimited by the sealing lips (16, 17) is larger than the internal diameter of the annular portions (11, 13), and that the external diameter of each half of the coupling member in the region (22) between the annular portion (13) adjoining the pipe insertion end (12) and the annular groove (18) adjoining the other annular portion (11), is larger, in the untightened condition of the clip, than in the axially adjacent regions (13 ; 23, 11), wherein said region (22) having the larger external diameter and the internal sealing lips (16, 17) can be pressed radially inwardly when the clip strap (2) is tightened, in order to press the sealing lips (16, 17) against the outside of the pipes.

2. A coupling member according to claim 1, characterised in that some (17) of the sealing lips (16, 17), in the untightened condition of the clip (1), are of the same internal diameter as the annular portions (11, 13).

3. A coupling member according to claim 1 or claim 2, characterised in that the annular portion (11) adjoining the middle sealing rib (10) has sealing ribs (14) which extend in an annular configuration, with symmetrical side surfaces.

4. A coupling member according to one of claims 1 to 3, characterised in that hard rings (15) are embedded in the annular portions (11, 13).

## Revendications

1. Manchon (8) en caoutchouc pour un collier de serrage large (1) comportant une bande large (2) pouvant être bloquée en entourant extérieurement le manchon (8) afin d'établir une liaison axiale étanche des extrémités de deux tuyaux, le manchon (8) étant divisé intérieurement par une nervure médiane périphérique d'étanchéité (10) en forme de bague, en deux moitiés identiques parmi lesquelles chaque moitié comporte une région annulaire (13) voisine de l'extrémité (12) du manchon (8) pour l'introduction du tuyau et une région annulaire (11) voisine de la nervure d'étanchéité (10) et, entre ces régions annulaires, des lèvres périphériques d'étanchéité (16, 17) en forme de bagues dirigées vers l'intérieur et délimitées de part et d'autre par des rainures annulaires intérieures (18-21), au moins quelques-unes (16) des lèvres d'étanchéité (16, 17) présentant, lorsque le collier (1) n'est pas à l'état serré, un diamètre intérieur plus faible que celui des régions annulaires (11, 13) et des flancs inclinés vers la nervure médiane d'étanchéité, le diamètre au fond de la rainure annulaire (18) immédiatement adjacente à la nervure médiane d'étanchéité (10) étant plus grand que le diamètre intérieur des régions annulaires (11, 13) caractérisé par le fait que les diamètres intérieurs des régions annulaires (11, 13) sont égaux et le diamètre au fond de toutes les rainures annulaires (18, 21) délimitées par les lèvres d'étanchéité (16, 17) est plus grand que le diamètre intérieur des régions annulaires (11, 13) ; et que le diamètre extérieur de chaque moitié de manchon est, dans la région (22), comprise entre la région annulaire (13) voisine de l'extrémité (12) d'introduction du tuyau et la rainure annulaire (18) voisine de l'autre région annulaire (11), plus grand que dans les régions axiales voisines (13, 23, 11), lorsque le collier (1) est à l'état non serré, cette région (22) présentant le plus grand diamètre extérieur et les lèvres d'étanchéité (16, 17) réalisées intérieurement pouvant être comprimées radialement vers l'intérieur, lors du serrage de la bande (2), afin de presser les lèvres d'étanchéité (16, 17) contre la face externe des tuyaux.

2. Manchon selon la revendication 1, caractérisé par le fait que quelques-unes (17) des lèvres d'étanchéité (16, 17) ont un diamètre intérieur égal à celui des régions annulaires (11, 13) à l'état non serré du collier (1).

3. Manchon selon la revendication 1 ou 2, caractérisé par le fait que la région annulaire (11) voisine de la nervure médiane d'étanchéité (10) comporte des nervures périphériques d'étanchéité (14) en forme de bagues avec des flancs symétriques.

4. Manchon selon l'une quelconque des revendications 1 à 3, caractérisé par la fait que des bagues dures (15) sont noyées dans les régions annulaires (11, 13).

Fig.1

Fig.2